# EUROPÄISCHE PATENTANMELDUNG

(11) **EP 0 931 955 A1**
(43) Veröffentlichungstag der Anmeldung: **28.07.1999**
(21) Anmeldenummer: 99100623.0
(22) Anmeldetag: 14.01.1999
(51) Int. Cl.: F16F 9/084, B60G 15/14

(54) **Luftfeder mit einem Rollbalg**

(30) Priorität: 24.01.1998 DE 19802703
(71) Anmelder: Bayerische Motoren Werke Aktiengesellschaft, 80788 München (DE)
(72) Erfinder: Dill, Albrecht, 80797 München (DE); Joseph, Adrian, 85276 Pfaffenhofen (DE)

(57) **Zusammenfassung**

Luftfeder (1) mit einem Rollbalg (2), der mit seinem oberen Ende an einem Fahrzeug und mit seinem unten nach innen eingerollten Ende an einem Abrollkörper (8) befestigt ist. Der Abrollkörper (8) ist direkt oder über ein Zwischenteil (Dämpfer 7) an einem Radträger (12) oder an einem Radführungselement des Fahrzeugs abgestützt. Der Abrollkolben (8) ist etwa um die Längsachse (9) des Rollbalgs (2) drehbar an dem Zwischenteil (Dämpfer 7) oder an dem Radträger bzw. Radführungselement befestigt.

## Beschreibung

Die Erfindung betrifft eine Luftfeder mit einem Rollbalg, mit den im Oberbegriff des Patentanspruches 1 angegebenen Merkmalen.

Eine derartige Luftfeder ist in der EP-A-0 253 261 an einem Kraftfahrzeug verwendet und weist einen Rollbalg auf, der an seinem unten nach innen eingerollten Ende drehfest an einem Abrollkörper befestigt ist. Das obere Ende des Rollbalgs ist an einem Gehäuse befestigt, das über ein Kugellager drehbar an der Karosserie des Fahrzeugs abgestützt ist. An dem Gehäuse ist ein Luftanschluß vorgesehen, an dem ein Luftschlauch angeschlossen sein dürfte. Das Gehäuse führt bei Drehbewegungen des Abrollkolbens um seine Achse entsprechende Drehbewegungen aus. Um die Bewegungen des Gehäuses nicht zu behindern, dürfte der Luftschlauch schleifenförmig verlegt sein, wodurch der für die Luftfeder erforderliche Bauraum erhöht ist. Der über eine größere Weglänge verlegte Luftschlauch kann im Fahrbetrieb durch Steinschlag oder andere von der Fahrbahn hochgeschleuderte Teile beschädigt werden.

Der Erfindung liegt die Aufgabe zugrunde, eine Luftfeder mit den Merkmalen im Oberbegriff des Patentanspruches 1 anzugeben, die einen geringeren Bauraum erfordert und weniger störanfällig ist.

Diese Aufgabe ist durch die im Patentanspruch 1 angegebenen Merkmale gelöst. Vorteilhafte Ausgestaltungen der Erfindung sind den Unteransprüchen entnehmbar.

Mit der drehbaren Befestigung des unten nach innen eingerollten Rollbalgendes an dem Zwischenteil oder an dem Radträger bzw. Radführungselement kann das obere Ende des Rollbalges bzw. ein sich daran anschließendes Gehäuse ortsfest gehalten werden, wodurch auch die in das Gehäuse bzw. am oberen Rand des Rollbalges in den Innenraum der Luftfeder mündende Luftleitung ortsfest zu verlegen ist. Die ortsfeste Luftleitung kann beispielsweise aus Stahl, Aluminium, Kunststoff oder dergleichen stabiler gefertigt werden, wodurch die Luftleitung durch im Fahrbetrieb von der Fahrbahn hochgeschleuderte Teile nicht oder kaum zu beschädigen ist. Die feste Luftleitung oder eine verwendete Schlauchleitung ist auf einem kurzen Weg zu der Luftfeder zu verlegen, wodurch die Anordnung der Luftfeder einen geringeren Bauraum erfordert. Bei einer auf kurzem Weg zu der Luftfeder geführten Schlauchleitung besteht gegenüber einer schleifenförmig verlegten Schlauchleitung weniger die Gefahr einer Beschädigung durch im Fahrbetrieb von der Fahrbahn hochgeschleuderte Teile. Die Anschlußelemente für eine feste Luftleitung können einfacher ausgebildet werden als für einen Luftschlauch.

Drei Ausführungsbeispiele der Erfindung werden anhand einer Zeichnung näher erläutert. Es zeigen
- Figur 1: ein erstes Ausführungsbeispiel in einem Längsschnitt durch das an einem Vorderrad eines Kraftfahrzeugs vorgesehene Federbein,
- Figur 2: eine vergrößerte Einzelheit von Figur 1,
- Figur 3: ein zweites Ausführungsbeispiel in einer Figur 2 entsprechenden Ansicht,
- Figur 4: ein drittes Ausführungsbeispiel in einer Figur 1 entsprechenden Ansicht und
- Figur 5: eine vergrößerte Einzelheit des Federbeins in Figur 4.

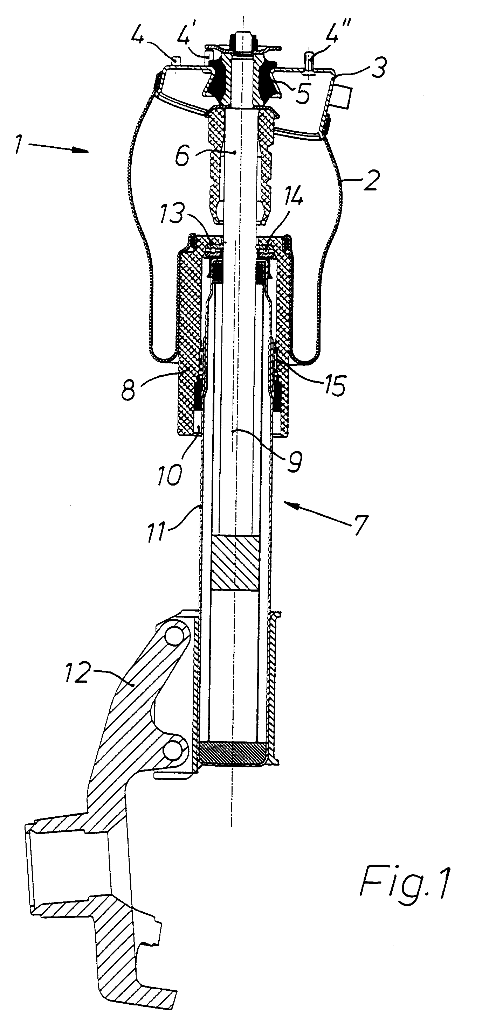

Das in Figur 1 gemäß einem ersten Ausführungsbeispiel dargestellte Federbein ist an dem linken Vorderrad eines Kraftfahrzeugs vorgesehen und weist eine Luftfeder 1 mit einem Rollbalg 2 auf, der an seinem oberen, etwa kreisförmigen Ende unter einem Neigungswinkel an einem Gehäuse 3 angeschlossen ist. Zur einstellbaren Befestigung des Gehäuses 3 an der Karosserie des Fahrzeugs sind Schrauben 4, 4', 4'' und ein nicht dargestellter Zentrierbolzen verwendet. Ein Dämpfer 7 durchsetzt den Rollbalg 2 und das Gehäuse 3 etwa zentral und weist eine von einem inneren Kolben nach außen abstehende Kolbenstange 6 auf, die über eine obere Lagerung 5 an der Karosserie abgestützt ist. Das untere, nach innen eingerollte Ende des Rollbalges 2 ist an einem außen etwa zylindrischen Abrollkörper 8 befestigt, der eine zu seiner Längsachse etwas exzentrisch ausgebildete axiale Ausnehmung 10 aufweist, in die von unten das Außenrohr 11 des Dämpfers 7 eingebracht ist. Der Abrollkörper 8 weist an seinem oberen Stirnbereich eine Durchtrittsöffnung für die Kolbenstange 6 des Dämpfers 7 auf. Im axialen Überlagerungsbereich ist der Innendurchmesser der Ausnehmung 10 größer als der Außendurchmesser des Außenrohres 11 ausgebildet, das im unteren Bereich mit einem Radträger 12 fest verbunden ist. Die axiale Ausnehmung 10 im Abrollkörper 8 ist oben von einer inneren axialen Anlagefläche 13 begrenzt. Zur drehbaren Abstützung des Abrollkörpers 8 gegenüber dem Außenrohr 11 des Dämpfers 7 sind zwei Drehlagerungen vorgesehen, die einen axialen Abstand voneinander aufweisen und durch ein Kugellager 14 und ein Rollenlager 15 gebildet sind.

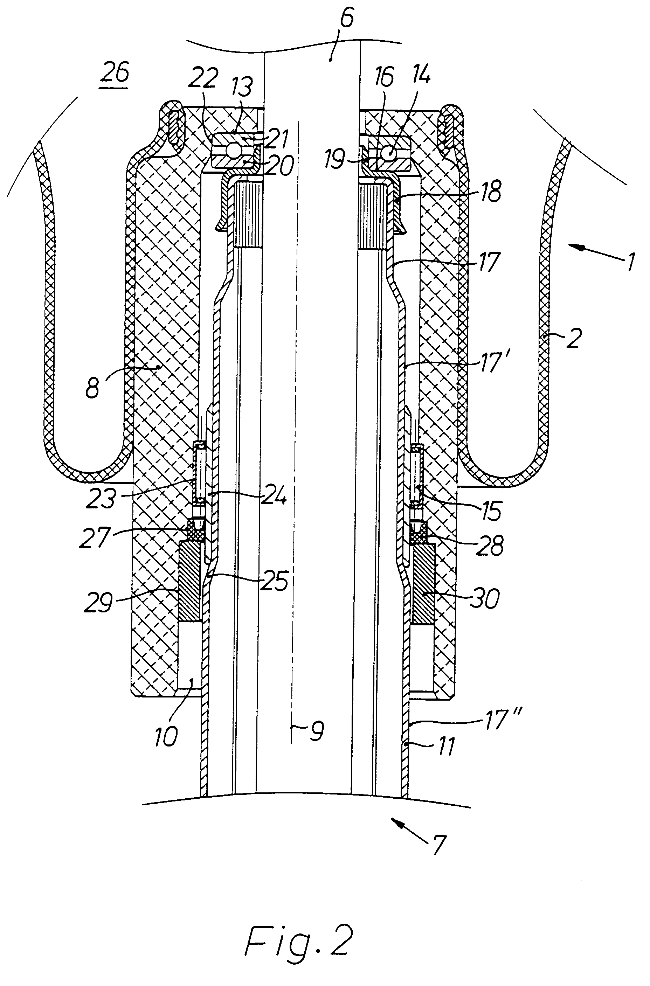

Wie sich aus der in Figur 2 vergrößerten Darstellung des Abrollkolbens 8 ergibt, ist das Kugellager 14 zwischen der axialen Anlagefläche 13 des Abrollkolbens 8 und einer axialen Stützfläche 16 angeordnet, die von einem Hülsenteil 18 gebildet ist, das axial auf einen kleineren Durchmesser 17 des Außenrohres 11 aufgesteckt ist. Das Hülsenteil 18 weist einen vom inneren Rand der Stützfläche 16 axial nach oben gerichteten Rohransatz 19 auf, der das an der Stützfläche 16 anliegende Lagerteil 20 des Kugellagers 14 radial von innen zentriert. Das an der Anlagefläche 13 des Abrollkörpers 8 anliegende andere Lagerteil 21 des Kugellagers 14 ist von einem zylindrischen Abschnitt 22 des Abrollkörpers 8 von außen radial zentriert. Der Außendurchmesser des Außenrohres 11 ist mehrfach abgestuft und weist nach unten einen axial an den kleinen Durchmesser 17 anschließenden größeren Durchmesser 17' und danach einen größeren Durchmesser 17'' auf. In ähnlicher Weise ist der Innendurchmesser der Ausnehmung 10 nach unten abgestuft, wodurch in jeder Querschnittsebene der Innendurchmesser der Ausnehmung 10 größer als der betreffende Außendurchmesser des Außenrohres 11 ist. In dem Zwischenraum zwischen dem Durchmesser 17' des Außenrohres 11 und dem Innendurchmesser der Ausnehmung 10 ist das Rollenlager 15 angeordnet. Dieses ist als Nadellager ausgebildet und weist ein äußeres, an dem Innendurchmesser der Ausnehmung 10 festgeklemmtes oder anders befestigtes äußeres Lagerteil 23 auf. Das auf den Durchmesser 17' aufgepreßte innere Lagerteil 24 des Rollenlagers 15 weist eine zum äußeren Lagerteil 23 größere axiale Erstreckung auf und liegt mit seinem unteren Ende an dem Übergangsbereich 25 zwischen dem Durchmesser 17' und dem größeren Durchmesser 17'' axial an. Zur Abdichtung des Innenraumes 26 der Luftfeder 1 nach außen ist in einen axialen Absatz 27 der Ausnehmung 10 eine Dichtung 28 eingebracht, die von einem Stützelement 30 in seiner Lage gehalten ist, das in einen unteren axialen Absatz 29 der Ausnehmung 10 von unten eingepreßt ist, der einen zum Absatz 27 größeren Durchmesser aufweist.

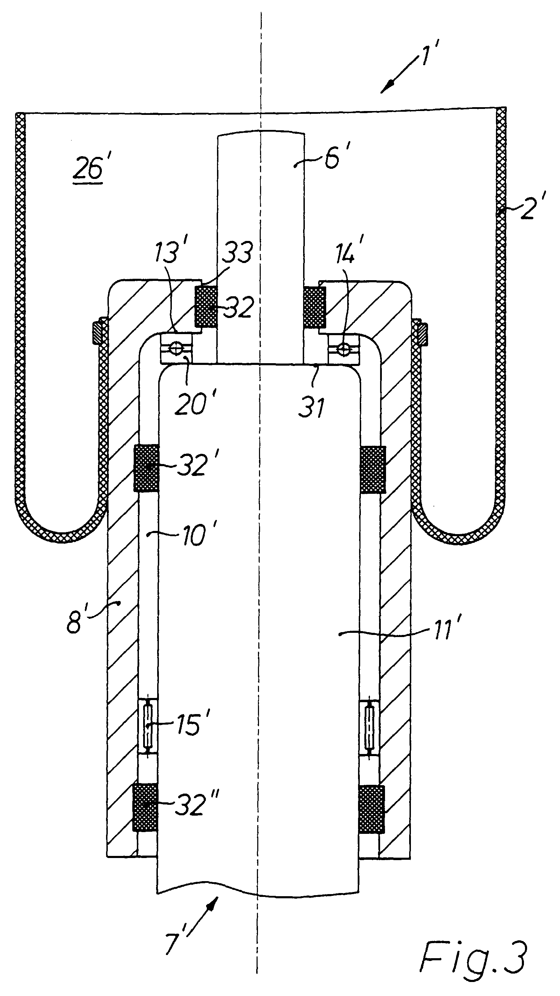

Das gemäß Figur 3 in einer Figur 2 entsprechenden Ansicht dargestellte zweite Ausführungsbeispiel ist ähnlich wie das erste Ausführungsbeispiel gebildet. Zur Vermeidung einer wiederholten Beschreibung sind zwischen diesen Ausführungen vergleichbare Teile mit einem gleichen Bezugszeichen oder mit einem gleichen Bezugszeichen und einem geänderten hochgestellten Zeichen versehen. Bei der zweiten Ausführung sind zur drehbaren Abstützung des Abrollkörpers 8' gegenüber dem Außenrohr 11' des Dämpfers 7' ein Kugellager 14' und ein Rollenlager 15' verwendet. Das dem Außenrohr 11' zugewandte Lagerteil 20' des Kugellagers 14' stützt sich an der Stirnfläche 31 des Außenrohres 11' ab. Durch an drei Stellen eingezeichnete Dichtungen 32, 32', 32'' ist angedeutet, daß die Abdichtung des Innenraumes 26' der Luftfeder 1' nach außen beispielsweise an diesen Stellen erfolgen kann. Die Dichtung 32 ist zwischen einem oberen inneren Umfangsbereich 33 des Abrollkörpers 8' und der aus dem Dämpfer 7' nach oben herausgeführten Kolbenstange 6' angeordnet. Die Dichtung 32' ist axial zwischen dem Kugellager 14' und dem Rollenlager 15' radial zwischen dem Abrollkörper 8' und dem Außenrohr 11' in der Ausnehmung 10' angeordnet. Die weitere Dichtung 32'' ist in der Ausnehmung 10' zwischen dem Abrollkörper 8' und dem Außenrohr 11' des Dämpfers 7' angeordnet. In Abhängigkeit von der Größe des Druckes im Innenraum 26' können eine Dichtung oder mehrere Dichtungen 32, 32', 32'' erforderlich sein.

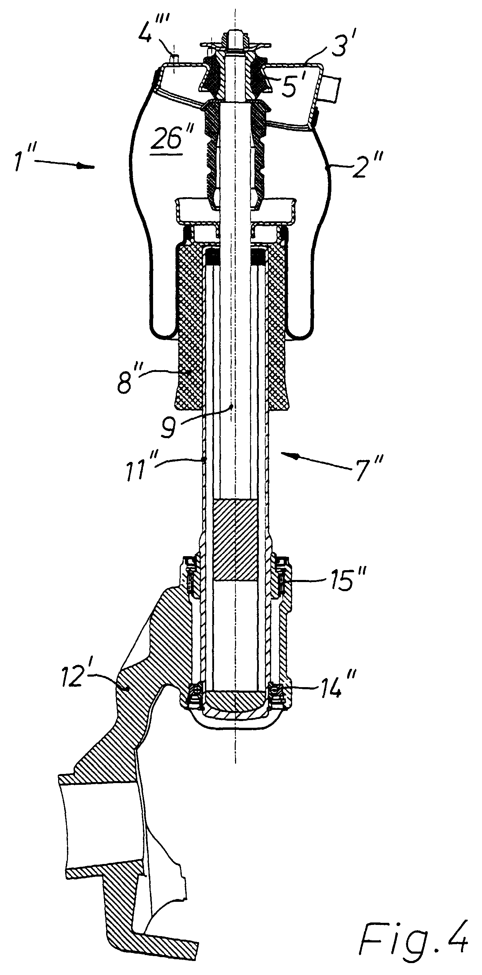

Bei dem in Figur 4 dargestellten dritten Ausführungsbeispiel sind mit den ersten beiden Ausführungsbeispiel vergleichbare Teile verwendet, die zur Vermeidung einer wiederholten Beschreibung dieser Bauteile mit einer gleichen Bezugszahl oder einer gleichen Bezugszahl und einem geänderten hochgestellten Zeichen versehen sind. Bei dem dritten Ausführungsbeispiel ist das unten eingerollte Ende des Rollbalges 2'' an dem oberen Bereich des Abrollkörpers 8'' befestigt, der drehfest mit dem Aussenrohr 11'' des Dämpfers 7'' verbunden ist. Zur drehbaren Abstützung des Abrollkörpers 8'' ist das Außenrohr 11'' drehbar an dem Radträger 12'' befestigt, wofür zwei einen axialen Abstand voneinander aufweisende Drehlagerungen mit einem Kugellager 14'' und einem Rollenlager 15'' vorgesehen sind.

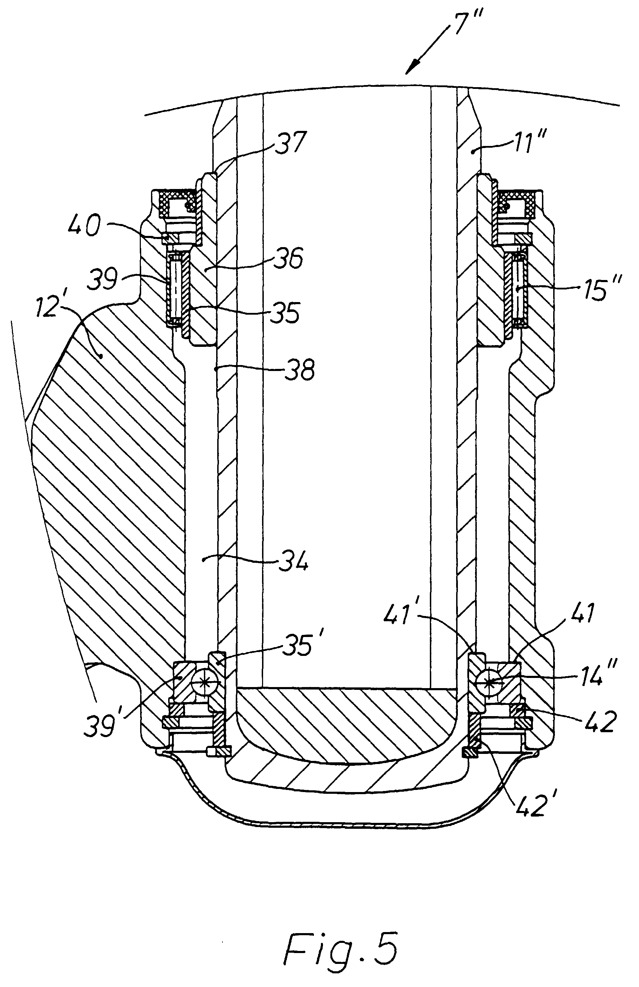

Aus der vergrößerten Einzelheit gemäß Figur 5 geht hervor, daß das untere Ende des Außenrohres 11'' in eine Aufnahmeöffnung 34 im Radträger 12' eingesteckt ist. Zwischen einem unteren Umfangsbereich der Aufnahmeöffnung 34 und dem Aussendurchmesser des Außenrohres 11'' ist das Kugellager 14'' angeordnet. Das Rollenlager 15'' dagegen ist zwischen einem oberen Umfangsbereich der Aufnahmeöffnung 34 und dem Außendurchmesser des Außenrohres 11'' angeordnet. Radial zwischen dem Außenrohr 11' und dem inneren Lagerring 35 des Rollagers 15'' ist ein Distanzring 36 zwischengelegt. Weitere konstruktive Einzelheiten sind der Figur entnehmbar. Zur axialen Fixierung des Distanzringes 36 ist an dem Außendurchmesser des Außenrohres 11' ein radial Absatz 37 gebildet und der Distanzring 36 bis zum Anliegen an dem Absatz 37 auf einen Außendurchmesser 38 des Außenrohres 11'' axial aufgepreßt. Der äußere Lagerring 39 des Rollenlagers 15'' ist an einem radial vergrößerten zylindrischen Absatz der Aufnahmeöffnung 34 durch Klemmwirkung und/oder ein axiales Sicherungselement 40 axial fixiert. Der äußere Lagerring 39' und der innere Lagerring 35' des Kugellager 14'' sind dagegen zwischen Anschlägen 41, 41', 42, 42' axial fixiert, wodurch das Außenrohr 11'' des Dämpfers 7' gegenüber dem Radträger 12' axial festgelegt ist.

Die Drehlagerungen können auch auf andere Weise beispielsweise durch andere Wälzlager oder Gleitlager gebildet sein. Die konstruktive Ausgestaltung der verwendeten Teile kann weitgehend den Anforderungen angepaßt sein. Es ist nicht erforderlich, daß die Luftfeder von einem Dämpfer axial durchsetzt ist.

## Patentansprüche

1. Luftfeder mit einem Rollbalg, der mit seinem oberen Ende an einem Fahrzeug und mit seinem unten nach innen eingerollten Ende an einem Abrollkörper befestigt ist, der direkt oder über ein Zwischenteil an einem Radträger oder an einem Radführungselement des Fahrzeugs abgestützt ist, dadurch gekennzeichnet, daß der Abrollkolben (8, 8', 8'') etwa um die Längsachse (9) des Rollbalgs (2, 2', 2'') drehbar an dem Zwischenteil (Dämpfer 7, 7') oder an dem Radträger (12') bzw. Radführungselement befestigt ist.

2. Luftfeder nach Anspruch 1, dadurch gekennzeichnet, daß der Abrollkörper (8'') mit dem Zwischenteil (Dämpfer 7'') drehfest verbunden ist und das Zwischenteil (Dämpfer 7'') etwa um die Längsachse (9) des Rollbalgs (2'') drehbar an dem Radträger (12') bzw. Radführungselement befestigt ist.

3. Luftfeder nach Anspruch 1 oder 2, mit einem Zwischenteil, das von unten in eine axiale Ausnehmung im Abrollkörper eingebracht ist, dadurch gekennzeichnet, daß zur drehbaren Befestigung des Abrollkörpers (8, 8') bzw. des Zwischenteiles (Dämpfer 7'') zwei Drehlagerungen (Kugellager 14, 14', 14'' und Rollenlager 15, 15', 15'') vorgesehen sind, die einen axialen Abstand voneinander aufweisen.

4. Luftfeder nach Anspruch 3, dadurch gekennzeichnet, daß die beiden Drehlagerungen durch ein Kugellager (14, 14', 14'') und ein Rollenlager (15, 15', 15'') gebildet sind.

5. Luftfeder nach Anspruch 4, mit einer axialen Ausnehmung im Abrollkörper, die sich im oberen Bereich des Abrollkörpers radial nach innen verengt und dadurch eine innere axiale Anlagefläche bildet, dadurch gekennzeichnet, daß zwischen der inneren axialen Anlagefläche (13, 13') des Abrollkörpers (8, 8') und einer axialen Stützfläche (16, Stirnfläche 31) des Zwischenteiles (Dämpfer 7, 7') das Kugellager (14, 14') angeordnet ist.

6. Luftfeder nach Anspruch 5, dadurch gekennzeichnet, daß die axiale Stützfläche die obere Stirnfläche (31) des Zwischenteiles (Dämpfer 7') ist.

7. Luftfeder nach Anspruch 5 oder 6, dadurch gekennzeichnet, daß in einem axialen Überlagerungsbereich des Abrollkörpers (8, 8') und des Zwischenteiles (Dämpfer 7, 7') die axiale Ausnehmung (10, 10') des Abrollkörpers (8, 8') einen gegenüber einem äußeren Umfangsbereich des Zwischenteiles (Dämpfer 7, 7') größeren Durchmesser aufweist und axial unter dem Kugellager (14, 14') das Rollenlager (15, 15') zwischen einem Umfangsbereich der Ausnehmung (10, 10') und dem äußeren Umfangsbereich des Zwischenteiles (Dämpfer 7, 7') angeordnet ist.

8. Luftfeder nach Anspruch 7, dadurch gekennzeichnet, daß in dem Raum zwischen dem Umfangsbereich des Abrollkörpers (8, 8') und dem äußeren Umfangsbereich des Zwischenteiles (Dämpfer 7, 7') oder einem aus dem Zwischenteil (Dämpfer 7) hervorstehenden Element (Kolbenstange 6') eine Dichtung (28, 32, 32', 32'') angeordnet ist, die den Innenraum (26, 26') der Luftfeder (1, 1') nach außen abdichtet.

9. Luftfeder nach Anspruch 4, dadurch gekennzeichnet, daß der Radträger (12') oder das Radführungselement eine zum Außendurchmesser eines unteren Bereiches des Zwischenteiles (Dämpfer 7'') größere Aufnahmeöffnung (34) aufweist, in der das in die Aufnahmeöffnung (34) eingebrachte Zwischenteil (Dämpfer 7'') von zwei axial entgegengesetzt wirkenden Anschlägen (41 und 42 bzw. 41' und 42') axial fixiert ist.

10. Luftfeder nach Anspruch 9, dadurch gekennzeichnet, daß das Rollenlager (15'') im oberen Bereich der Aufnahmeöffnung (34) zwischen einem oberen Umfangsflächenbereich der Aufnahmeöffnung (34) und einer oberen Umfangsfläche des Zwischenteiles (Dämpfer 7'') angeordnet ist.

11. Luftfeder nach Anspruch 9 oder 10, dadurch gekennzeichnet, daß das Kugellager (14'') im unteren Bereich der Aufnahmeöffnung (34) zwischen einem unteren Umfangsflächenbereich der Aufnahmeöffnung (34) und einer unteren Umfangsfläche des Zwischenteiles (Dämpfer 7'') angeordnet ist.

12. Luftfeder nach einem der Ansprüche 1 bis 11, dadurch gekennzeichnet, daß das Zwischenteil das Außenrohr (11, 11', 11'') eines Dämpfers (7, 7', 7'') und das aus dem Zwischenteil (Dämpfer 7') hervorstehende Element die Kolbenstange (6') des Dämpfers (7') ist.
